# EUROPÄISCHE PATENTSCHRIFT

(11) **EP 3 363 100 B1**
(45) Veröffentlichungstag und Bekanntmachung des Hinweises auf die Patenterteilung: **15.09.2021**
(21) Anmeldenummer: 16770687.8
(22) Anmeldetag: 21.09.2016
(51) Int. Cl.: H02K 7/102, H02K 11/00, H02K 11/33

(54) **ANTRIEB, AUFWEISEND EINEN VON EINEM UMRICHTER ÜBER ERSTE ELEKTRISCHE LEITUNGEN GESPEISTEN ELEKTROMOTOR UND EINE BREMSE UND VERFAHREN ZUM BETREIBEN EINES ANTRIEBS**
DRIVE, HAVING AN ELECTRIC MOTOR SUPPLIED BY AN INVERTER VIA FIRST ELECTRICAL LINES AND A BRAKE, AND METHOD FOR OPERATING A DRIVE
TRANSMISSION COMPRENANT UN MOTEUR ÉLECTRIQUE ALIMENTÉ PAR UN CONVERTISSEUR PAR L'INTERMÉDIAIRE DE CÂBLES ÉLECTRIQUES, ET UN FREIN, AINSI QUE PROCÉDÉ DE FONCTIONNEMENT DE CE MÉCANISME D'ENTRAÎNEMENT

(30) Priorität: 15.10.2015 DE 102015013290
(43) Veröffentlichungstag der Anmeldung: 22.08.2018
(73) Patentinhaber: SEW-Eurodrive GmbH & Co, 76646 Bruchsal (DE)
(72) Erfinder: NIKOLA, Joachim, 76703 Kraichtal (DE)
(86) Internationale Anmeldenummer: PCT/EP2016/025100
(87) Internationale Veröffentlichungsnummer: WO 2017/063752

(56) Entgegenhaltungen:
- DE-A1-102009 007 797
- DE-A1-102009 055 708
- DE-A1-102014 104 287
- DE-A1-102014 108 510
- DE-T5-112009 005 302

## Beschreibung

Die Erfindung betrifft einen Antrieb, aufweisend einen von einem Umrichter über erste elektrische Leitungen gespeisten Elektromotor und eine Bremse und Verfahren zum Betreiben eines Antriebs.

Es ist allgemein bekannt, dass eine elektromagnetisch betätigbare Bremse Kabel zu elektrischen Versorgung benötigt.

**Aus der** DE 10 2014 104287 A1 **ist ein Antriebsstrang einer Energiegewinnungsanlage bekannt.**

Aus DE102009007797 A1 ist ein Antrieb bekannt, umfassend einen elektrischen Motor und eine Bremse, die elektrisch gelüftet wird, wobei die Bremse ebenso wie der Motor über Motorstromleitungen mit elektrischer Energie versorgt wird.

**Aus der** DE 11 2009 005 302 T5 **ist eine rotierende elektrische Mschinenvorrichtung bekannt.**

**Aus der** DE 10 2014 108 510 A1 **ist ein Schrittmotor mit integrierter Bremse und Steuerschaltkreis bekannt.**

**Aus der** DE 10 2009 055 708 A1 **ist ein elektrischer Stellantrieb bekannt.**

Der Erfindung liegt daher die Aufgabe zugrunde, einen möglichst geringen Aufwand für Verkabelung bei einer Anlage mit Antrieben zu erreichen.

Erfindungsgemäß wird die Aufgabe bei dem Antrieb nach den in Anspruch 1 und bei dem Verfahren nach den in Anspruch 12 angegebenen Merkmalen gelöst.

Wichtige Merkmale der Erfindung bei dem Antrieb sind, dass er einen von einem Umrichter über erste elektrische Leitungen gespeisten Elektromotor und eine elektromagnetisch betätigbare Bremse, aufweist, wobei der Motor einen Energiespeicher aufweist, aus welchem Energie zur Betätigung der Bremse entnehmbar ist,
wobei der Energiespeicher aus den ersten elektrischen Leitungen speisbar ist.

Von Vorteil ist dabei, dass keine separaten Versorgungskabel für die Bremse notwendig sind sondern die Bremse aus den Motorzuleitungen versorgbar ist. Dabei wird allerdings kein Regelverfahren ausgeführt, wenn elektrische Energie, die zum Betreiben der Bremse vorgesehen ist, von der Motorzuleitung entnommen wird. Um eine zeitliche Entzerrung von der Energieentnahme und der Betätigung der Bremse zu erreichen, ist ein Energiespeicher vorgesehen, der schon vor der Betätigung aufladbar ist. Somit ist das Aufladen dann vorsehbar, wenn die Regelung des Motors nicht notwendig ist.

Erfindungsgemäß ist die Bremse bistabil, also nur zur Zustandsänderung, also nur zur jeweiligen Betätigung, elektrische Energie zugeführt werden muss, so dass durch das jeweilige Betätigen der Zustand geändert wird, vom gelüfteten zum eingefallenen Zustand oder umgekehrt. Von Vorteil ist dabei, dass nur zur Betätigung der Bremse Energie notwendig ist, nicht aber zum dauerhaften Lüften oder Einfallen der Bremse. Die Bremse weist für das dauerhafte Halten Haltemittel auf, so dass mittels Elektromagnet nur eine jeweilige Zustandsänderung zu bewirken ist. Das nachfolgende Halten mittels des Haltemittels erfordert keine Zufuhr von elektrischer Leistung.

Bei einer vorteilhaften Ausgestaltung verbinden die ersten elektrischen Leitungen die Leistungselektronik mit der Statorwicklung des Elektromotors, insbesondere über eine Hybridsteckverbindung. Von Vorteil ist dabei, dass eine einzige Steckverbindung ausreichend ist für das wahlweise Abtrennen oder Verbinden von Leistungsleitungen und Signalleitungen. Zwar ist auch über die Signalleitungen elektrische Leistung an den Energiespeicher zuführbar, jedoch ist diese Leistung viel geringer als die über die Leistungsleitungen, also Motorzuleitung, zuführbare Leistung. Somit ist bei häufigem Betätigen der Bremse über die Signalleitungen dem Energiespeicher nicht ausreichend viel Leistung zuführbar.

Bei einer vorteilhaften Ausgestaltung ist die dem Energiespeicher aus den ersten elektrischen Leitungen zugeführte elektrische Leistung steuerbar mittels eines Schaltnetzteils. Von Vorteil ist dabei, dass das Schaltnetzteil ein gesteuertes Abtrennen der Leistungszufuhr ermöglicht.

Bei einer vorteilhaften Ausgestaltung ist die der Bremse aus dem Energiespeicher zugeführte elektrische Energie steuerbar mittels einer Ansteuereinheit,
die von Steuersignalen gesteuert wird, die von einer Signalelektronik des Umrichters mittels einer Datenleitung, insbesondere mittels einer über die Hybridsteckverbindung geführten Datenleitung, insbesondere über ein Interface, zur Ansteuereinheit geführt werden. Von Vorteil ist dabei, dass die Bremse vom Umrichter aus ansteuerbar ist.

Bei einer vorteilhaften Ausgestaltung wird ein oder das Interface über dritte Leitungen versorgt, die von einem Schaltnetzteil des Umrichters zum Interface, insbesondere über die Hybridsteckverbindung, geführt sind. Von Vorteil ist dabei, dass die dritten Leitungen nur eine geringe Leistungszufuhr ermöglichen, nämlich nur derart viel wie auch die Signalleitungen, also die Datenleitung. Somit sind hierbei nur geringe Leitungsquerschnitte notwendig und die zugehörigen Leitung flexibel verlegbar. Die Motorzuleitungen weisen zwar einen größeren Leitungsquerschnitt auf als die Signalleitungen und sind somit unflexibler bei der Verlegung, jedoch sind keine zusätzlichen Leitungen zur Versorgung der Bremse notwendig.

Bei einer vorteilhaften Ausgestaltung ist ein Winkelsensor zur Bestimmung der Drehwinkelstellung der Rotorwelle des Elektromotors elektrisch verbunden mit dem Interface, insbesondere zur Übertragung der bestimmten Winkelinformation an den Umrichter, insbesondere an die Signalelektronik des Umrichters. Von Vorteil ist dabei, dass das Interface als digitale Schnittstelle ausführbar ist und somit die bestimmten winkelwerte mit Zeitstempel zusammen übertragbar sind sowie weitere Messwerte, wie Temperatur der Statorwicklungen oder dergleichen, übertragbar.

Bei einer vorteilhaften Ausgestaltung ist ein Temperatursensor zur Bestimmung der Temperatur der Statorwicklung des Elektromotors elektrisch verbunden mit dem Interface, insbesondere zur Übertragung der bestimmten Temperaturinformation an den Umrichter, insbesondere an die Signalelektronik des Umrichters. Von Vorteil ist dabei, dass mittels des als digitale Schnittstelle ausgebildeten Interface verschiedene Messwerte an den Umrichter übertragbar sind.

Bei einer vorteilhaften Ausgestaltung ist das Interface als digitale Schnittstelle ausgeführt. Von Vorteil ist dabei, dass verschiedene Messwerte übertragbar sind.

Bei einer vorteilhaften Ausgestaltung weist die Bremse einen ersten und einen zweiten Elektromagneten auf,
wobei axial zwischen dem ersten und dem zweiten Elektromagneten eine Bremsscheibe angeordnet ist,
wobei die Bremsscheibe drehfest aber axial verschiebbar auf der Rotorwelle des Elektromotors angeordnet ist. Von Vorteil ist dabei, dass nur zur Betätigung elektrische Leistung erforderlich ist. Denn mittels der Betätigung wird von einem ersten stabilen Zustand, beispielsweise vom gelüfteten zustand, zu einem zweiten stabilen Zustand, beispielsweise zum eingefallenen Zustand, gewechselt.

Bei einer vorteilhaften Ausgestaltung ist ein erstes Haltemittel, insbesondere Dauermagnet oder Federelement, die Bremsscheibe in einer ersten Position, insbesondere für den eingefallenen Zustand der Bremse, und
ein zweites Haltemittel, insbesondere Dauermagnet oder Federelement, die Bremsscheibe in einer zweiten Position, insbesondere für den gelüfteten Zustand der Bremse,
vorgesehen,
wobei das erste und das zweite Haltemittel jeweils mit dem Gehäuse des Elektromotors verbunden ist, insbesondere lösbar verbunden ist. Von Vorteil ist dabei, dass die beiden zustände der Bremse mittels der Haltemittel stabilisierbar sind. Somit ist nur eine Aktivierungsenergie zum Wechseln der Zustände notwendig.

Die Erfindung wird nun anhand von Abbildungen näher erläutert:
In der Figur 1 ist ein schematischer Schaltplan des erfindungsgemäßen Antriebs gezeigt, wobei der Elektromotor eine bistabile Bremse 4 aufweist.
In der Figur 2 ist die Bremse 4 in Schnittansicht schematisch gezeigt.

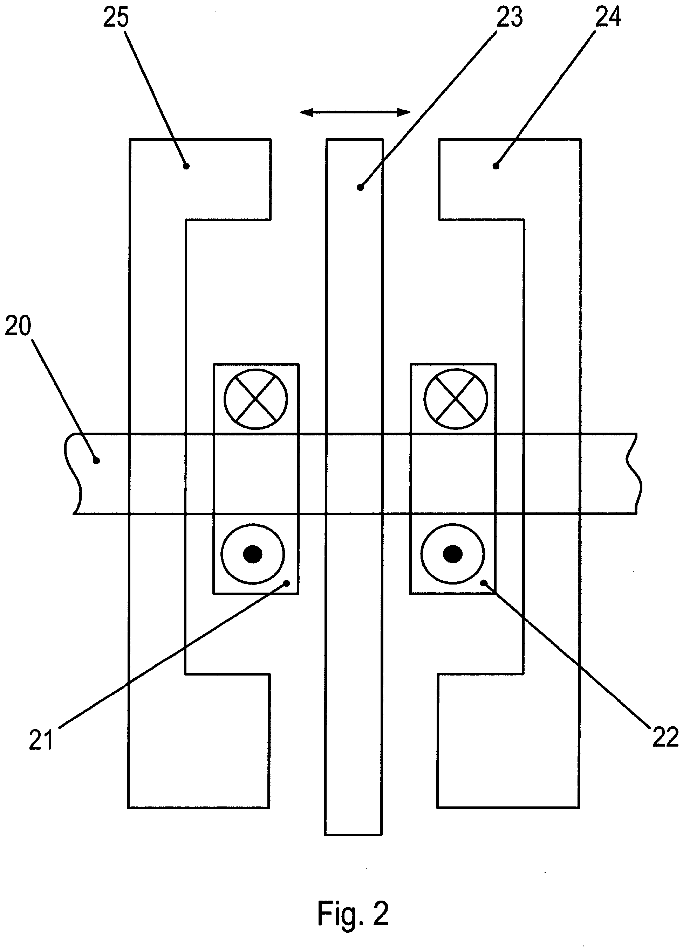

Wie in der Figur 2 gezeigt, weist die bistabile Bremse 4 eine Bremsscheibe 23 auf, welche drehfest, aber axial verschiebbar mit der Rotorwelle 20 des Elektromotors verbunden ist. Die Bremsscheibe besteht aus einem ferromagnetischen Material, wie beispielsweise ein ferromagnetischer Stahl. Auf ihrer einem ersten Elektromagneten 21 zugewandten axialen Seite weist die Bremsscheibe 23 einen Bremsbelag auf.

Hierbei weist die Bremsscheibe 23 eine Innenverzahnung auf, welche mit einer entsprechenden Außenverzahnung der Welle 20 im Eingriff steht.

Axial vor der Bremsscheibe 23 ist der erste Elektromagnet 21 und axial hinter der Bremsscheibe ein zweiter Elektromagnet 22 angeordnet.

Bei Bestromung des ersten Elektromagneten 21 wird die Bremsscheibe 23 zu diesem Elektromagneten hin gezogen, wobei dann ein Bremsbelag der Bremsscheibe 23 auf eine Reibfläche gedrückt wird, die mit einem ersten Dauermagneten 25 fest verbunden ist. Auch nach Beendigung der Bestromung des ersten Elektromagneten 21 bleibt die Bremsscheibe 23 in der erreichten axialen Position, weil der Dauermagnet 25 die Bremsscheibe 23 weiterhin anzieht.

Erst bei nachfolgender Bestromung des zweiten Elektromagneten 22 wird die Bremsscheibe 23 zu diesem zweiten Elektromagneten 22 hin gezogen, wobei ein Luftspalt zwischen Bremsscheibe 23 und dem zweiten Elektromagneten 22 besteht. Auch nach Beendigung der Bestromung des zweiten Elektromagneten 22 bleibt die Bremsscheibe 23 in der inzwischen erreichten axialen Position, weil der zweite Dauermagnet 24 die Bremsscheibe 23 weiterhin anzieht. Der Luftspalt bleibt auch hierbei bestehen, so dass keine Reibbremsung auftritt.

Die Rotorwelle 20 ist mit einem Rotor des Elektromotors 1 drehfest verbunden.

Somit ist nur zur Änderung des Zustandes der Bremse elektrische Energie aufzuwenden. Zum Einfallen der Bremse 4 ist eine kurzzeitige Bestromung des ersten Elektromagneten 21 notwendig und zum Lüften der Bremse 4 eine kurzzeitige Bestromung des zweiten Elektromagneten.

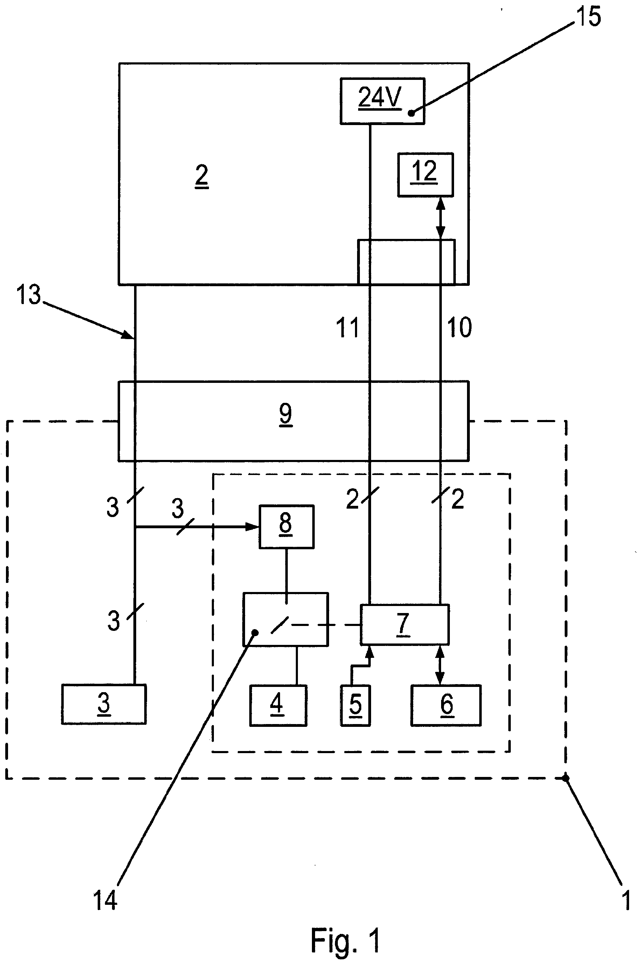

Wie in Figur 1 gezeigt, ist der Stator des Elektromotors 1 dreiphasig über die Leitungen 13 aus dem Umrichter gespeist.

Dabei führen die Leitungen 13 über eine Hybridsteckverbindung 9, insbesondere umfassend Steckverbinderteil und Gegensteckverbinderteil.

Die Leistungselektronik des Umrichters 2 wird mit pulsweitenmodulierten Signalen derart angesteuert, dass ein dreiphasiges Drehspannungssystem über die Leitungen 13 dem Motor 1, insbesondere dem Stator 3, zur Verfügung gestellt wird.

Die pulsweitenmodulierten Signale werden von einer Signalelektronik des Umrichters 2 erzeugt, welche aus einem Schaltnetzteil 15 versorgt ist, das auch eine 24 Volt-Gleichspannung zur Versorgung bereit stellt.

Diese Gleichspannung wird über Versorgungsleitungen 11 auch dem Motor 1, insbesondere einer im Motor 1 angeordneten elektronischen Schaltung, zur Verfügung gestellt. Hierbei sind die Versorgungsleitungen 11 auch über die Hybridsteckverbindung 9 geführt. Steckverbinderteil und Gegensteckverbinderteil der Hybridsteckverbindung 9 sind jeweils als Hybridsteckverbinderteile ausgeführt, weisen also jeweils elektrische Kontakte für Leistungsübertragung und für Niederspannungs- oder Signal-Übertragung auf.

Die vom Umrichter 2 zum Motor 1 geführten Datenleitungen 10 dient zum Austausch von Daten zwischen der Signalelektronik des Umrichters und der elektronischen Schaltung, die im Motor angeordnet ist.

Die Datenleitung 10 ist zweiadrig ausgeführt. Die Leitung 11 ist ebenfalls zweiadrig ausgeführt.

Bei Bestromung des Stators 3, also der Statorwicklung, mit der vom Umrichter erzeugten Drehspannung, die eine vorgegebene Drehfrequenz aufweist, wird der Rotor einem Drehfeld ausgesetzt und somit in Drehbewegung versetzt.
Aus den Leitungen 13 zur Speisung des Motors wird nicht nur der Motor, insbesondere also Stator, elektrisch versorgt, sondern auch ein Schaltnetzteil 8, aus welchem ein Energiespeicher beladbar ist.

Zur Regelung des Motors durch den Umrichter 2 werden die in den Leitungen 13 fließenden Ströme erfasst. Dabei ist ein hochgenaues Erfassen wichtig für eine hohe Regelgüte.

Erfindungsgemäß wird deshalb das Schaltnetzteil 8 nur dann von den Leitungen 13 mit elektrischer Leistung gespeist, wenn kein Regeln des Motors stattfindet und/oder keine Bestimmung von Parametern des Motors stattfindet, bei welcher eine insbesondere hochgenaue Stromerfassung notwendig ist.

Aus dem Energiespeicher ist eine Ansteuereinheit 14, insbesondere umfassend Bremsgleichrichter und Leistungsschalter, insbesondere steuerbarer Bremsgleichrichter versorgbar, welche die Bremse 4 bestromt, insbesondere den ersten oder zweiten Elektromagneten (20, 21).

Welcher der beiden Elektromagneten (20, 21) bestromt wird, bestimmt die von einem Interface 7 übermittelte Steuerinformation. Dabei ist das Interface 7 als digitale Schnittstelle ausgebildet und mittels der Leitungen 10 mit dem Umrichter, insbesondere mit der Signalelektronik 12 des Umrichters zum Datenaustausch verbunden.

Elektrisch versorgt wird dieses Interface 7 über die Leitungen 11, die zwar auch elektrische Leistung dem Energiespeicher und/oder dem Schaltnetzteil 8 zur Verfügung stellen können. Aber diese zur Verfügung stellbare Leistung ist viel geringer als die über die Leitungen 13 zur Verfügung stellbare Leistung, insbesondere mehr als eine zehnmal geringere Leistung.

Mit dem Interface 7 sind auch ein Temperatursensor 5, der im Stator angeordnet ist und somit die Temperatur der Statorwicklungen erfasst, und/oder ein Winkelsensor 6 verbunden, der die Winkelstellung der Rotorwelle erfasst. Dabei ist der drehbar gelagerte Teil des Winkelsensors 6 drehfest mit der Rotorwelle verbunden und der stationäre Teil des Winkelsensors 6 mit dem Gehäuseteil des Motors.

Beim Betreiben des Motors, also beim vom Umrichter 2 aus gesteuerten geregelten Betrieb des Motors, wird der Motor nur dann geregelt, wenn von den Leitungen 13 dem Energiespeicher und/oder dem Schaltnetzteil 8 keine Leistung zugeführt wird. Die zur Betätigung der Bremse 4 notwendige Energie wird also zunächst nur dem Energiespeicher entnommen. Das Aufladen des Energiespeichers erfolgt nur in derjenigen Zeitspanne, in welcher kein geregelter Betrieb des Motors erfolgt und auch keine Bestimmung von Parametern des Motors, welche für den geregelten Betrieb notwendig oder nützlich sind.

Beispiel für solche Parameter sind Motorstrom, also Motorstromraumzeiger, und daraus insbesondere zusammen mit der am Motor anliegenden Spannung bestimmbare Parameter, wie Temperatur des Rotors, eine Induktivität der Statorwicklung oder dergleichen.

Die Signalelektronik 12 des Umrichters 2 weist ein Mittel zur Steuerung des Beladens auf. Wenn das Mittel ein Freigabesignal für den geregelten Betrieb herausgibt, wird keine elektrische Leistung über die Leitungen 13 an das Schaltnetzteil 8 abgeführt. Somit ist auch die Motorstrombestimmung mit hoher Genauigkeit ausführbar, also der geregelte Betrieb mit hoher Regelgüte und/oder die Bestimmung von Parametern des Motors. Wenn dieses Freigabesignal jedoch von dem Mittel weggenommen wird, also nicht herausgegeben wird, wird der Energiespeicher über das Schaltnetzteil gesteuert beladen.

Die im Energiespeicher speicherbare Energiemenge ist zumindest stets ausreichend für zwei Betätigungen der Bremse 4, also für zwei aufeinander folgende Zustandsänderungen. Somit ist auch bei Ausfall des Versorgungsnetzes ein Einfallen der Bremse sicher gewährleistbar.

Wenn das Versorgungsnetz ausfällt, wird über die Datenleitung 10 eine entsprechende Information übers Interface 7 weitergeleitet an die Ansteuereinheit 14, welche dann - gespeist aus dem Energiespeicher - das Einfallen der Bremse 4 steuert.

Bei einem weiteren erfindungsgemäßen Ausführungsbeispiel wird auf die Leitungen 13 ein Gleichstromanteil aufgeprägt, insbesondere zusätzlich zu dem Wechselstromanteil, welchen der Umrichter 2 zur Regelung des Motors erzeugt. Hierzu werden die Leistungshalbleiter der Leistungselektronik des Umrichters 2 entsprechend angesteuert.

Aus diesem Gleichstromanteil wird der Energiespeicher beladen, wenn die Signalelektronik 12 des Umrichters 2 hierzu ein entsprechendes Freigabesignal über das Interface 7 erteilt. Wenn der Energiespeicher vollgeladen ist, wird ein entsprechendes Meldesignal über das Interface 7 zurückgemeldet an die Signalelektronik 12. Nur wenn also der Energiespeicher noch Energie benötigt, ist dann ein Wiederholen des Aufladens ausführbar.

### Bezugszeichenliste

1 Elektromotor
2 Umrichter
3 Stator, insbesondere umfassend Statorwicklung
4 bistabile Bremse, insbesondere elektromagnetisch betätigbare Bremse
5 Temperatursensor
6 Winkelsensor
7 Interface
8 Schaltnetzteil mit Energiespeicher
9 Hybridsteckverbindung, insbesondere umfassend Steckverbinderteil und Gegensteckverbinderteil
10 Datenleitung
11 Versorgungsleitung, insbesondere 24 Volt Versorgung
12 Signalelektronik des Umrichters 2
13 Leitung zur Speisung des Antriebs 1, insbesondere des Motors
14 Ansteuereinheit, insbesondere umfassend Bremsgleichrichter und Leistungsschalter, insbesondere steuerbarer Bremsgleichrichter
15 Schaltnetzteil zur Erzeugung der 24 Volt-Versorgungsspannung
20 Welle, insbesondere Rotorwelle oder mit der Rotorwelle drehfest verbundene Welle
21 erster Elektromagnet,
22 zweiter Elektromagnet
23 Bremsscheibe
24 zweiter Dauermagnet
25 erster Dauermagnet

## Patentansprüche

1. Antrieb, aufweisend einen von einem Umrichter (2) über erste elektrische Leitungen gespeisten Elektromotor (1) und eine elektromagnetisch betätigbare Bremse (4),
**wobei** der Motor einen Energiespeicher aufweist, aus welchem Energie zur Betätigung der Bremse (4) entnehmbar ist,
wobei der Energiespeicher aus den ersten elektrischen Leitungen speisbar ist,
**dadurch gekennzeichnet, dass**
**der Antrieb Mittel umfasst, die so eingerichtet sind, dass der Energiespeicher nur dann vom Ausgangsstrom des Umrichters (2) beladen wird, wenn kein motorisches Regeln des Motors (1), ausgeführt wird, also der Motor von der Signalelektronik (12)** des Umrichters **nicht geregelt wird,**
**wobei die Bremse (4) eine bistabile Bremse (4) ist, so dass also nur zur Zustandsänderung, also nur zur jeweiligen Betätigung, elektrische Energie zugeführt werden muss.**

2. Antrieb nach Anspruch 1,
**dadurch gekennzeichnet, dass**
durch das jeweilige Betätigen der Zustand **der Bremse (4)** geändert wird, also vom gelüfteten zum eingefallenen Zustand oder umgekehrt.

3. Antrieb nach mindestens einem der vorangegangenen Ansprüche,
**dadurch gekennzeichnet, dass**
die ersten elektrischen Leitungen (13) die Leistungselektronik mit der Statorwicklung des Elektromotors (1) verbinden, insbesondere über eine Hybridsteckverbindung.

4. Antrieb nach mindestens einem der vorangegangenen Ansprüche,
**dadurch gekennzeichnet, dass**
die dem Energiespeicher aus den ersten elektrischen Leitungen zugeführte elektrische Leistung steuerbar ist mittels eines Schaltnetzteils (8).

5. Antrieb nach mindestens einem der vorangegangenen Ansprüche,
**dadurch gekennzeichnet, dass**
die der Bremse (4) aus dem Energiespeicher zugeführte elektrische Energie steuerbar ist mittels einer Ansteuereinheit,
die von Steuersignalen gesteuert wird, die von einer Signalelektronik (12) des Umrichters (2) mittels einer Datenleitung (10), insbesondere mittels einer über die Hybridsteckverbindung geführten Datenleitung (10), insbesondere über ein Interface (7), zur Ansteuereinheit geführt werden.

6. Antrieb nach mindestens einem der vorangegangenen Ansprüche,
**dadurch gekennzeichnet, dass**
ein oder das Interface (7) über Versorgungsleitungen (11) versorgt wird, die von einem Schaltnetzteil (8) des Umrichters (2) zum Interface (7), insbesondere über die Hybridsteckverbindung, geführt sind.

7. Antrieb nach mindestens einem der vorangegangenen Ansprüche,
**dadurch gekennzeichnet, dass**
ein Winkelsensor (6) zur Bestimmung der Drehwinkelstellung der Rotorwelle des Elektromotors (1) elektrisch verbunden ist mit dem Interface (7), insbesondere zur Übertragung der bestimmten Winkelinformation an den Umrichter (2), insbesondere an die Signalelektronik (12) des Umrichters (2).

8. Antrieb nach mindestens einem der vorangegangenen Ansprüche,
**dadurch gekennzeichnet, dass**
ein Temperatursensor (5) zur Bestimmung der Temperatur der Statorwicklung des Elektromotors (1) elektrisch verbunden ist mit dem Interface (7), insbesondere zur Übertragung der bestimmten Temperaturinformation an den Umrichter (2), insbesondere an die Signalelektronik (12) des Umrichters (2).

9. Antrieb nach mindestens einem der vorangegangenen Ansprüche,
**dadurch gekennzeichnet, dass**
das Interface (7) als digitale Schnittstelle ausgeführt ist.

10. Antrieb nach mindestens einem der vorangegangenen Ansprüche,
**dadurch gekennzeichnet, dass**
die Bremse (4) einen ersten und einen zweiten Elektromagneten (21, 22) aufweist,
wobei axial zwischen dem ersten und dem zweiten Elektromagneten (21, 22) eine Bremsscheibe (23) angeordnet ist,
wobei die Bremsscheibe (23) drehfest aber axial verschiebbar auf der Rotorwelle des Elektromotors (1) angeordnet ist.

11. Antrieb nach mindestens einem der vorangegangenen Ansprüche,
**dadurch gekennzeichnet, dass**
ein erstes Haltemittel, insbesondere Dauermagnet (24, 25) oder Federelement, die Bremsscheibe (23) in einer ersten Position, insbesondere für den eingefallenen Zustand der Bremse (4), und
ein zweites Haltemittel, insbesondere Dauermagnet (24, 25) oder Federelement, die Bremsscheibe (23) in einer zweiten Position, insbesondere für den gelüfteten Zustand der Bremse (4),
vorgesehen ist,
wobei das erste und das zweite Haltemittel jeweils mit dem Gehäuse des Elektromotors (1) verbunden ist, insbesondere lösbar verbunden ist.

12. Verfahren zum Betreiben eines Antriebs,
wobei der Antrieb einen von einem Umrichter (2) speisbaren Elektromotor (1) und eine elektromagnetisch betätigbare insbesondere bistabile Bremse (4),
wobei der Ausgangsstrom des Umrichters (2) als Motorstrom erfasst wird und die erfassten Werte zum Regeln des Motors verwendbar sind,
**wobei** die Bremse (4) aus einem Energiespeicher versorgbar ist,
**dadurch gekennzeichnet, dass**
**der Antrieb Mittel umfasst, die so eingerichtet sind, dass der Energiespeicher nur dann vom Ausgangsstrom des Umrichters (2) beladen wird, wenn kein motorisches Regeln des Motors ausgeführt wird, also der Motor von der Signalelektronik (12)** des Umrichters **nicht geregelt wird,**
**wobei die Bremse (4) eine bistabile Bremse (4) ist, so dass also nur zur Zustandsänderung, also nur zur jeweiligen Betätigung, elektrische Energie zugeführt werden muss.**

## Claims

1. Drive having an electric motor (1), fed by a converter (2) by means of first electrical lines, and an electromagnetically actuatable brake (4),
the motor having an energy storage device from which energy can be drawn to actuate the brake (4),
the energy storage device being able to be fed from the first electrical lines,
**characterised in that**
the drive comprises means that are configured such that the energy storage device is charged by the output current of the converter (2) only when no closed-loop motor control of the motor (1) is being carried out, i.e. when the motor is not being controlled by the signal electronics (12) of the converter,
the brake (4) being a bistable brake (4) such that electrical energy thus has to be supplied only for status changes, i.e. only for each actuation.

2. Drive according to claim 1,
**characterised in that**
as a result of each actuation, the status of the brake (4) is changed, i.e. from the released to the applied status or vice versa.

3. Drive according to at least one of the preceding claims,
**characterised in that**
the first electrical lines (13) connect the power electronics to the stator winding of the electric motor (1), in particular by means of a hybrid plug connection.

4. Drive according to at least one of the preceding claims,
**characterised in that**
the electrical power supplied to the energy storage device from the first electrical lines can be controlled in an open-loop manner by means of a switched-mode power supply (8).

5. Drive according to at least one of the preceding claims,
**characterised in that**
the electrical energy supplied to the brake (4) from the energy storage device can be controlled in an open-loop manner by means of an actuation unit,
which is controlled in an open-loop manner by control signals conducted to the actuation unit by a signal electronics (12) of the converter (2) by means of a data line (10), in particular by means of a data line (10) guided via the hybrid plug connection, in particular via an interface (7).

6. Drive according to at least one of the preceding claims,
**characterised in that**
a or the interface (7) is powered by means of supply lines (11), which are guided from a switched-mode power supply (8) of the converter (2) to the interface (7), in particular via the hybrid plug connection.

7. Drive according to at least one of the preceding claims,
**characterised in that**
an angle sensor (6) for determining the rotational-angle position of the rotor shaft of the electric motor (1) is electrically connected to the interface (7), in particular for transmitting the determined angle information to the converter (2), in particular to the signal electronics (12) of the converter (2).

8. Drive according to at least one of the preceding claims,
**characterised in that**
a temperature sensor (5) for determining the temperature of the stator winding of the electric motor (1) is electrically connected to the interface (7), in particular for transmitting the determined temperature information to the converter (2), in particular to the signal electronics (12) of the converter (2).

9. Drive according to at least one of the preceding claims,
**characterised in that**
the interface (7) is configured as a digital interface.

10. Drive according to at least one of the preceding claims,
**characterised in that**
the brake (4) has a first and a second electromagnet (21, 22),
a brake disc (23) being arranged axially between the first and the second electromagnet (21, 22),
the brake disc (23) being arranged on the rotor shaft of the electric motor (1) in a nonrotatable but axially displaceable manner.

11. Drive according to at least one of the preceding claims,
**characterised in that**
a first retaining means, in particular a permanent magnet (24, 25) or spring element, the brake disc (23) in a first position, in particular for the applied status of the brake (4), and
a second retaining means, in particular a permanent magnet (24, 25) or spring element, the brake disc (23) in a second position, in particular for the released status of the brake (4), is provided,
the first and the second retaining means each being connected, in particular releasably connected, to the casing of the electric motor (1).

12. Method for operating a drive,
the drive an electric motor (1), which can be fed by a converter (2), and an electromagnetically actuatable brake, in particular a bistable brake (4),
the output current of the converter (2) being detected as the motor current and the detected values being usable for the closed-loop control of the motor,
the brake (4) being able to be powered from an energy storage device,
**characterised in that**
the drive comprises means that are configured such that the energy storage device is charged by the output current of the converter (2) only when no closed-loop motor control of the motor is being carried out, i.e. when the motor is not being controlled by the signal electronics (12) of the converter,
the brake (4) being a bistable brake (4) such that electrical energy thus has to be supplied only for status changes, i.e. only for each actuation.

## Revendications

1. Entraînement, présentant un moteur électrique (1), alimenté par un convertisseur (2) par des premières lignes électriques, et un frein pouvant être actionné de manière électromagnétique (4),
le moteur présentant un accumulateur d'énergie sur lequel de l'énergie peut être prélevée pour actionner le frein (4),
l'accumulateur d'énergie pouvant être alimenté à partir des premières lignes électriques,
**caractérisé en ce que** l'entraînement comprend des moyens qui sont aménagés de telle sorte que l'accumulateur d'énergie n'est chargé par le courant de sortie du convertisseur (2) que si aucune régulation motorisée du moteur (1) n'est effectuée, donc si le moteur n'est pas régulé par l'électronique de signalisation (12) du convertisseur,
le frein (4) étant un frein bistable (4) de sorte qu'il suffit donc d'amener de l'énergie électrique pour changer d'état, c'est-à-dire uniquement pour chaque actionnement.

2. Entraînement selon la revendication 1, **caractérisé en ce que** l'actionnement respectif change l'état du frein (4), c'est-à-dire d'un état purgé à l'état retombé ou vice versa.

3. Entraînement selon au moins l'une des revendications précédentes, **caractérisé en ce que** les premières lignes électriques (13) relient l'électronique de puissance à l'enroulement de stator du moteur électrique (1), en particulier par une connexion enfichable hybride.

4. Entraînement selon au moins l'une des revendications précédentes, **caractérisé en ce que** la puissance électrique amenée à l'accumulateur d'énergie à partir des premières lignes électriques peut être commandée au moyen d'une alimentation à découpage (8).

5. Entraînement selon au moins l'une des revendications précédentes, **caractérisé en ce que** l'énergie électrique amenée au frein (4) à partir de l'accumulateur d'énergie peut être commandée au moyen d'une unité de pilotage qui est commandée par des signaux de commande qui sont amenés à l'unité de pilotage à partir d'une électronique de signalisation (12) du convertisseur (2) au moyen d'une ligne de données (10), en particulier au moyen d'une ligne de données (10) acheminée par l'intermédiaire de la connexion enfichable hybride, en particulier par une interface (7).

6. Entraînement selon au moins l'une des revendications précédentes, **caractérisé en ce qu'**une ou ladite interface (7) est alimentée par des lignes d'alimentation (11) qui sont acheminées d'une alimentation à découpage (8) du convertisseur (2) jusqu'à l'interface (7), en particulier par l'intermédiaire de la connexion enfichable hybride.

7. Entraînement selon au moins l'une des revendications précédentes, **caractérisé en ce qu'**un capteur d'angle (6) est relié électriquement à l'interface (7) pour déterminer la position d'angle de rotation de l'arbre de rotor du moteur électrique (1), en particulier pour transmettre l'information d'angle déterminée au convertisseur (2), en particulier à l'électronique de signalisation (12) du convertisseur (2).

8. Entraînement selon au moins l'une des revendications précédentes, **caractérisé en ce qu'**un capteur de température (5) est relié électriquement à l'interface (7) pour déterminer la température de l'enroulement de stator du moteur électrique (1), en particulier pour transmettre l'information de température déterminée au convertisseur (2), en particulier à l'électronique de signalisation (12) du convertisseur (2).

9. Entraînement selon au moins l'une des revendications précédentes, **caractérisé en ce que** l'interface (7) est réalisée sous la forme d'une interface numérique.

10. Entraînement selon au moins l'une des revendications précédentes, **caractérisé en ce que** le frein (4) présente un premier et un deuxième électro-aimant (21, 22),
un disque de frein (23) étant disposé axialement entre le premier et le deuxième électro-aimant (21, 22),
le disque de frein (23) étant disposé de manière verrouillée en rotation mais axialement mobile sur l'arbre de rotor du moteur électrique (1).

11. Entraînement selon au moins l'une des revendications précédentes, **caractérisé en ce que**
un premier moyen de retenue, en particulier un aimant permanent (24, 25) ou un élément faisant ressort, retenant le disque de frein (23) dans la première position, en particulier pour l'état retombé du frein (4), et
un deuxième moyen de retenue, en particulier un aimant permanent (24, 25) ou un élément faisant ressort, retenant le disque de frein (23) dans une deuxième position, en particulier pour l'état purgé du frein (4),
sont prévus,
le premier et le deuxième moyen de retenue étant respectivement reliés au carter du moteur électrique (1), en particulier de manière amovible.

12. Procédé pour faire fonctionner un entraînement, l'entraînement présentant un moteur électrique (1) pouvant être alimenté par un convertisseur (2) et un frein (4), en particulier bistable, pouvant être actionné de manière électromagnétique,
le courant de sortie du convertisseur (2) étant détecté en tant que courant moteur, et les valeurs détectées pouvant être utilisées pour réguler le moteur,
le frein (4) pouvant être alimenté à partir d'un accumulateur d'énergie,
**caractérisé en ce que** l'entraînement comprend des moyens qui sont aménagés de telle sorte que l'accumulateur d'énergie n'est chargé par le courant de sortie du convertisseur (2) que si aucune régulation motorisée du moteur n'est effectuée, donc si le moteur n'est pas régulé par l'électronique de signalisation (12) du convertisseur,
le frein (4) étant un frein bistable (4) de sorte qu'il suffit donc d'amener de l'énergie électrique pour changer d'état, c'est-à-dire uniquement pour chaque actionnement.
